# EUROPEAN PATENT SPECIFICATION

(11) **EP 1 829 391 B1**
(45) Date of publication and mention of the grant of the patent: **17.08.2011**
(21) Application number: 05702681.7
(22) Date of filing: 14.01.2005
(51) Int. Cl.: H04W 36/14

(54) **DISTRIBUTED PICO-CELL MOBILITY**
VERTEILTE PICOZELLEN-MOBILITÄT
MOBILITE DE PICO-CELLULES DISTRIBUEE

(30) Priority: 22.12.2004 WO PCT/IB2004/052903
(43) Date of publication of application: 05.09.2007
(73) Proprietor: Telefonaktiebolaget L- M Ericsson (publ), 164 83 Stockholm (SE)
(72) Inventor: RYDNELL, Gunnar, S-421 59 V FRÖLUNDA (SE); LINDSKOG, Jan, S-435 43 PIXBO (SE); WALTHER, Roger, S-43137 MÖLNDAL (SE)
(74) Representative: Kühn, Friedrich Heinrich
(86) International application number: PCT/IB2005/050171
(87) International publication number: WO 2006/067643

(56) References cited:
- EP-A1- 1 414 262
- EP-A1- 1 528 706
- EP-A2- 1 515 483
- WO-A1-2004/027628
- US-A- 5 995 835
- US-A1- 2004 121 772
- US-A1- 2004 240 411
- US-B1- 6 876 854

## Description

### Field of the invention

This invention pertains to the area of wireless radio access techniques for pico-cell systems. More particular, the invention concerns the area of mobility enhancements for the IEEE 802.11 MAC layer and systems and methods making use of the latter.

### Background of the invention

The current standard for WLAN IEEE 802.11 has recently gained success in being wide spread to customers with the purpose of replacing wired Ethernet LANs with wireless access. The current deployed standard 802.11b, is using the 2.4 GHZ unlicensed band. At the time of writing the application, it is forecasted that if the current rate of deployment continues, the spectrum in the 2.4 GHz band will soon be insufficient, and that a migration to 5 GHz and 802.11a will take place. The 802.11a specification uses OFDM signalling at the PHY layer and the use of higher PHY rates. The IEEE 802.11 MAC layer and the MAC management are common to all PHY layers specified in 802.11.

The IEEE 802.16 Study Group on Mobile Broadband Wireless Access (MBWA) addresses radio access for fast moving vehicles with speeds up to above 200 km/h. It has been found advantageous to leverage the success of deployment of IEEE 802.11 WLANs when specifying a new protocol for Mobile Access in IEEE 802.16. However, the typical range for IEEE 802.11 systems is restricted to100 m, whereby a fast moving vehicle will travel through a number of cells in very short time.

The 802.11 mobility protocol is not adapted for deployment as a cellular system with high mobility. The 802.11 system has a flat and distributed architecture. The access points are all connected to each other and may be able to communicate to each other using proprietary protocols on the LAN level. In 802:11 systems, handover (HO) between access points are initiated by the mobile station, but only when the mobile station detects that a new access point is present by reading its beacon.

In GSM, arrangements are known in which pico-cells are distributed within the range of macro-cells, also denoted umbrella cells. Radio network parameters are set such that fast moving mobile stations will be pushed up to the large umbrella cells and will not dwell in the pico-cells, thereby avoiding excessive numbers of handovers.

Prior art document WO98/35511 shows a radio telephone system installed along a railway, whereby a mobile telephone on the train is handed over from base station to base station along the track. The setting up of a call on one channel between a mobile telephone and a base station causes the system to reserve the same channel at the next base station, thereby preparing for the call handover procedure to be effected.

According to the 802.11 MAC management pre-authentication is provided. The pre-authentication option allows a mobile station to be associated and authenticated before a given access point and allows subsequently the mobile station to be pre-authenticated before other given access points while being associated with the first access point so as to facilitate a smoother expected handover. According to the "802.112 Handboook", by B. O'hara and A. Petrick, IEEE press, 1999, one may chose to propagate a mobile station's authentication from one access point to another through the distribution system, DS, obviating the need for more than a single, initial authentication.

US2004/0240411 discloses a system in which a moving wireless terminal is capable of accomplishing and selecting an authenticating method in accordance with its own moving granularity/moving frequency. Wireless terminals are connected to wireless stations. The wireless stations periodically transmit beacons that contain domain information of access networks that the wireless stations provide. Before the wireless terminal move, it receives beacons from the wireless stations to which it will be probably connected next and obtain the domain information from the beacons. As a result, the wireless terminal is capable of detecting its own moving granularity.
According to one embodiment, an authenticating server authenticates the user with his or her user ID and password. When the authenticating server has successfully authenticated the user, it creates an encryption key for a wireless region.
In accordance with the moving granularity, the wireless terminal determines whether authentication information should be transferred to wireless stations to which the wireless terminal will be probably connected next or the authenticating server should newly perform an authenticating process for the wireless terminal after it is connected to the next wireless stations. This system will not be adapted to move with high speed, since the system is operating on a "cell to cell" basis.

US5995835 relates to a GSM system in which current and following channels for handover give rise to the same time interval and the same frequency. The document discloses a method of safely handing over a call set up between a mobile station using a current channel associated with a current base station to a following channel associated with a following base station along a path in a transport network for said mobile station, which path is associated in deterministic manner with successive base stations in a radio network for communication with mobile stations, involving measuring a propagation time difference between respective instants at which uplink data is received by a current base station in a current channel and by a following base station in a following channel. This method operates handover on a cell to cell basis. In one embodiment, two opposite direction paths of travel are defined whereby the system comprises two respective sets of channels for the two directions.

US2004/121772 shows there is provided a method for supporting mobility of a WLAN voice terminal using a data line, including: a first step where the WLAN voice terminal roams to a second access point and performs a probe process during association signalling between the WLAN voice terminal and a first access point; a second step where the WLAN voice terminal and the second access point perform a MAC address authentication process; a third step where a circuit interface unit performs handover by using terminal information of the WLAN voice terminal and MAC address information of the first access point upon the re-association request of the WLAN voice terminal through the second access point; and a fourth step where the WLAN voice terminal and the second access point perform an association signalling process after the handover.

WO2004/027628 addresses the problem in which access devices may be continuously mobile throughout a network, congestion may cause various network devices to become bottlenecks, while other network devices having available capacities may remain unutilized or underutilized. A system and method is provided for access point aggregation and resiliency in a hybrid wired/wireless local area network. A method for access point aggregation and resiliency is provided including the step of determining one or more available switch ports having a capability to handle a first access point group.

EP1414262 shows enhanced security procedures of a system in which a mobile node is handed over from the first access point to a second access point and performs reauthentication, the mobile node receives a second session key for secure communication from the authentication server by using a third private key generated with authentication information generated during previous authentication and shared with the authentication server and the second access point receives the second session key from the authentication server by using the second private key previously shared with the authentication server, This systems aims at securing that communication by means of all access points must be safe, especially during and after handover.

EP1104117 relates to cable arrangements for cells within a cellular mobile communication system being serviced by a base station for instance deployed in a tunnel, When a mobile station is switched on, it selects a base station with which it will secure the best radio link. If the mobile station is moved and changes cell, it can then re-select another base station. This selection/reselection process takes place with the aid of a beacon signal which is transmitted on a specific frequency by each base station. Coverage between adjacent cells is provided by means of signals launched down successive runs of cable. An amplifier is controlled to have a lower gain than the amplifiers of other frequencies so that the beacon signal from the adjacent cell is transmitted at a lower power than the radio signals transmitted from a transceiver. This ensures that the mobile stations will select the right transceiver in the boundary zones. Where the cellular system is the of the FDMA type, transmission of the single frequency carrying the beacon signal of the adjacent cell into the end zone of the given cell is sufficient to provide the overlap of cells used to facilitate handover.

EP1528706, filed before but published after the filing date of the present document, describes that in the prior art a communication scheme is known that eliminates the necessity for access authentication for the access point section to which the user's radio terminal apparatus is likely to carry out handover and enables immediate communication between the radio terminal apparatus and the access point.

EP1515483, filed before but published after the filing date of the preset document, deals with the problem occurring in hybrid wired/wireless network systems that may utilize one or more protocols in the 802.11 suite of protocols, wherein the mobility of access devices throughout the network may pose additional challenges for conventional switches and switching equipment. Since access devices are continuously changing their point of access to the network, conventional switches may not have the capability to control other network devices and/or entities to provide a seamless and efficient communication throughout the network. There is provided a method for hardware acceleration that comprises the step of creating at least one policy, i.e. QoS access policy, to be distributed among one or more of a plurality of access point groups. There is further provided a step of detecting at least one client movement from one access point groups to another, and distributing associated policy among one or more of a plurality of access point groups. At least one policy is associated with a particular one of the access point groups. The associated policy is identified and distributed to one or more access points in an access point group. The distribution of the policy may be conditioned on the occurrence of an event. Accordingly, an identified policy may be distributed to a particular access point group upon occurrence of the event.

### Summary of the invention

A mechanism is needed for more efficient mobility of fast moving mobile stations in pico-cell radio networks, in particular to the situation of MBWA deployment in road and railroad applications.

It is a first object of the invention to set forth a method, a system and a mobile station for increased handover speed between predefined cells.

This method has been accomplished by the subject matter set forth in method claim 1, system claim 8 and node claim 14.

According to one aspect of the invention, extensions to the IEEE802.11 mobility protocol to be used for MBWA radio access has been set forth. However, the ideas presented here are generally applicable to any pico-cell radio network, and maybe even more suited to a HiperLAN2 WLAN, given that the PHY layer is modified to a MBWA-PHY as proposed elsewhere.

Further advantages will appear from the following detailed description of the invention.

### Brief description of the drawings

- Fig. 1: shows a first embodiment of the system according to the invention,
- fig. 2: shows a second embodiment of the system according to the invention,
- fig. 3: discloses a timing diagram according to the first embodiment of the invention;
- fig. 4: discloses a timing diagram according to the second embodiment of the invention,
- fig. 5: discloses an alternative timing diagram according to the second embodiment of the invention, and

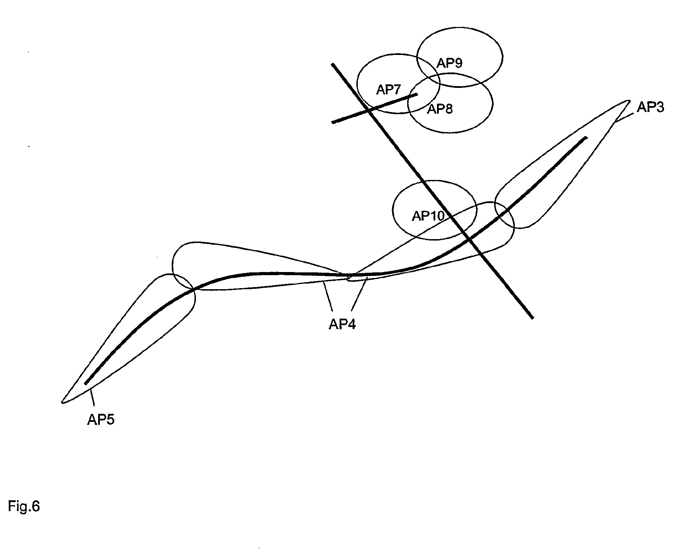

- fig. 6: shows an exemplary way of arranging access points along a route of transporta- tion.

### Description of preferred embodiments of the invention

According to a preferred embodiment of the invention, a pico-cell deployment along a highway or a railroad based on the IEEE 802.16 MBWA and using 802.11-like access points, APs, is considered. For such an application, each access point would typically be installed on the side of the highway covering a range of 100 m, thus there would be access points every 100 m in order to cover a part of the highway. A vehicle moving along the highway communicates with the closest access point. When moving into the next access points coverage area (pico-cell), the mobile station must first determine that a cell change has occurred, find the frequency of the new access point and re-associate with the new access point. The access point discovery and re-association mechanism specified in 802.11 will take some time, as it is not optimised for fast handover. In fact, 802.11 PHY is not meant for usage by fast moving stations (as opposed to MBWA).

For mobile stations moving along a highway or a railroad of the above application, there will in many cases only be "one way to go". In other words, there is a certain expectancy that the station will hand over to a given "next coming" access point. According to the invention, it is not necessary to demand that the mobile station initiates the HO. The fixed network side can initiate and prepare HO to a group of cells further along the travelling path. In this way, a group of access points can pre-authenticate the mobile station in advance by signalling between each other without communicating with the mobile station itself.

In this context, a pre-authentication area, PAA, is a linear or other contiguous structure consisting of a number of access points that the mobile station will visit in a known sequence. In the more general case, a pre-authentication area can consist of any network of access points without any specific geographical relation. Other interesting cases may be that a pre-authentication area consists of all access points in a sub-net, in a building, in a company or whatever. However, these cases may not be so interesting for HO optimisation, since moving around inside a building is seldom done at high speed.

### First embodiment of the invention

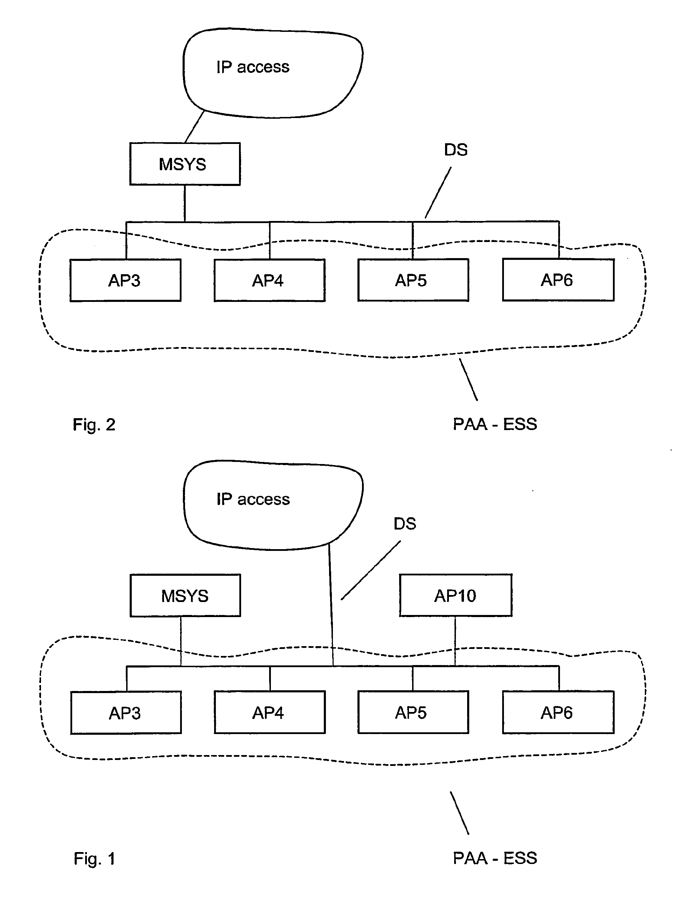

In fig. 1, a first embodiment of a network has been shown. The network comprises a number of access points AP3, AP4, AP5 ...AP6 connected with one another over a distribution system, DS, which provides Internet access. The above access points form a pre-authentication area, PAA, according to the invention and the access points may advantageously define a partly overlapping contiguous coverage, which may be arranged so as to follow a road or railway. Access points, AP10, which are not part of the PAA area may also be provided and connected to the distribution system. A system node, MSYS, may also be provided according to the invention, for authentication purposes.

According to the first embodiment of the invention, the pre-authentication area, PAA, comprises a set of non-hierarchical access points as shown in fig. 1 but without the MSYS node. Each access point constitutes the gateway towards the Internet. The access points are moreover connected with one another by means of the distribution system also denoted backbone network.

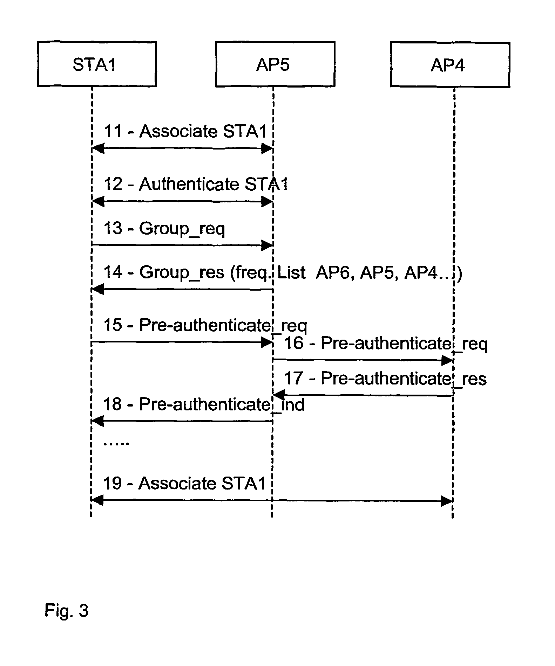

In fig. 3, a timing diagram pertaining to the first embodiment of the invention has been shown. It should be understood that exemplary access points AP5 and AP4 are part of a pre-authentication area, which may comprise many more access points (not shown).

The station STA1 moves into the pre-authentication area, PAA, and seeks to perform legacy steps of associating, 11, and authenticating, 12, before the access point AP5 that is encountered. The authentication with the access point may be based on the known Wired Equivalency Privacy, (WEP) authentication scheme or on alternatives offering a higher degree of security.

In step 13, the station STA1 issues a Group_Req message, 13, indicating to the access point that the mobile station is capable and interested in performing pre-authentication, PA, according to the invention. The issuance of the Group_req message may be conditional to inputs from higher layer software, for instance in dependency of whether the station is moving or can be expected to move above a predetermined speed.

In response, in step 14, the station receives a Group_res message including a list of frequencies pertaining to the access points in the pre-authentication area PAA. If the preauthentication area, PAA, constitutes a linear distribution of cells, the list of frequencies are preferably arranged in the order corresponding to the geographical index position in the group. In this manner the station can restrict its expected search for the frequencies of the two neighbouring order numbers, in this case AP6 and AP4. Note that the station cannot necessarily expect to obtain initial contact with one of the outer access point in the pre-authentication area, PAA. This is the case if the station moves too fast or if the traffic situation for the access point is congested. Moreover, once the travelling direction is established, the station only needs to scan after one frequency. Directional antennas can also be arranged so that a first PAA group points in one direction and a second PAA group points in the other direction.

In step 15, a pre-authentication request is issued from the station to the access point with which it has been associated. The pre-authentication request is echoed, step 16, from this access point to all other access points in the pre-authentication area, PAA.

Subsequently, in step 17 pre-authentication responses are received from all involved access point's, via the associated access point. It is noted that all inter access point traffic is delivered over the backbone in normal BSS fashion.

When the station has moved into reach of the next access point - in this case AP4 - the station can now immediately scan for the frequency used by AP4 and perform association without subsequent authentication, because the station is pre-authenticated.

### Second embodiment of the invention

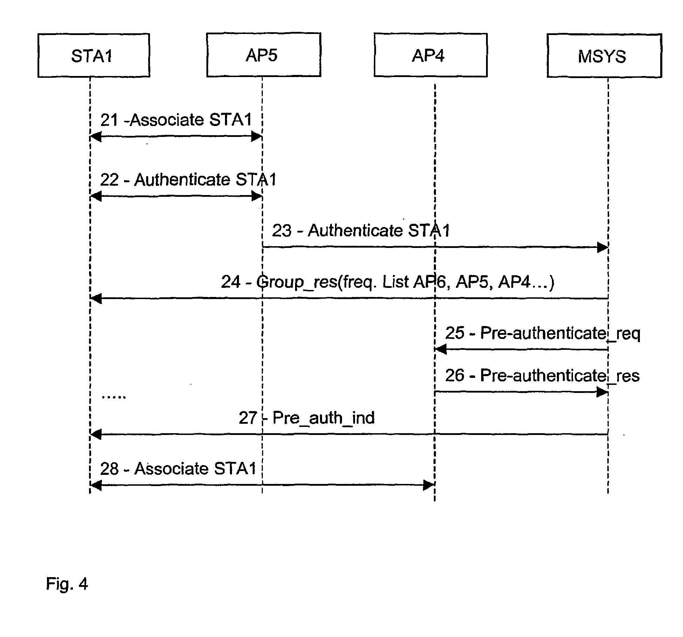

In the second embodiment of the invention, the PA structure is hierarchical in the sense that a system node, MSYS, coupling the BSS constituted by the AP's in a pre-authentication area, provides access to the Internet. In fig. 2, a second embodiment of the network according to the invention is provided. The network differs from the network shown in fig. 1, in that the system node is a gateway to the Internet access network. Fig. 4 shows a timing diagram pertaining to the second embodiment of the invention.

In this embodiment the MSYS has the role of performing the exclusive authentication of stations entering the pre-authentication area or providing additional authentication of stations. If the authentication is approved for a given station, access is given to that station.

In step 21, respectively step 22, the legacy step of association towards a first encountered access point - in this case AP5 - is accomplished. Step 22 - the station authenticating itself before the access point is optional.

Subsequently, in step 23, the associated access point, AP5, is seeking to authenticate the Station, STA1, before the gateway node, MSYS.

If the authentication is successful, the station is allowed access to the internet. Moreover, MSYS responds with a Group-response signal to the station - step 23 - indicating that it is in the process of pre-authenticating the station before the remaining access point's in the pre-authentication area. The Group response signal, step 24, includes a list of frequencies of all members of the pre-authentication area as explained above and having the same effects as explained above.

Following, in steps 25 and 26 the gateway node issues a pre-authentication request to the remaining access points in the pre-authentication area, PAA. Those access point's that accept respond with an optional pre-authentication response signal, 26.

Based on this result, the MSYS may optionally inform the station, for which access point's the station has been pre-authenticated, by means of a pre-authentication indication signal, 27. The station may thereby modify its efforts to seek for handover candidates, that is, omit seeking for frequencies of access point's by which the station has not been pre-authenticated.

When the station has moved on to the next access point, in this example, AP4, the station is ready for a swift handover only requiring the process step of association, step 28.

### Third embodiment of the invention

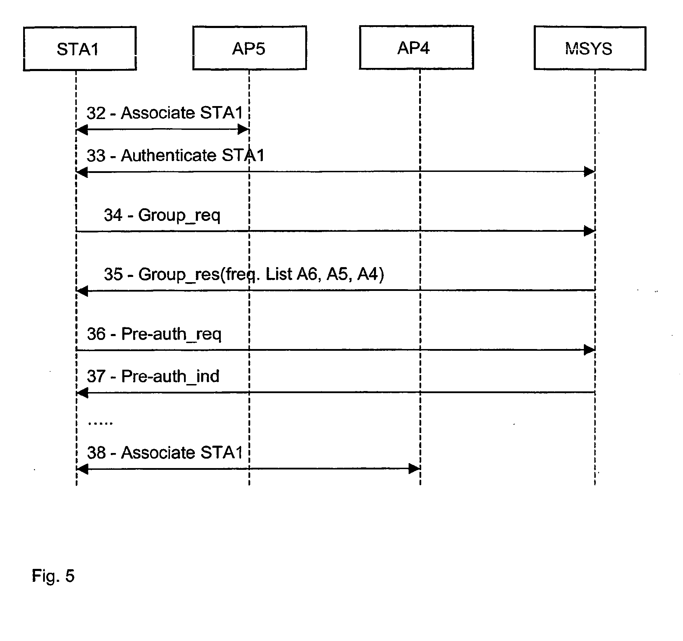

This embodiment, like the above embodiment, comprises a gateway node controlling access to the internet, as shown in fig. 2. Fig. 5 shows a timing diagram of the third embodiment of the invention.

In this embodiment, there is no authentication before the access points of the preauthentication area, PAA.

After the association in step 32, the station authenticates, step 33, with the gateway node, MSYS. Messages are communicated over the distribution system between the associated access point and the gateway node.

The station then issues a group request message, 34, signalling to the gateway node that is interested in being pre-authenticated for other access point's in the pre-authentication area, PAA. The station may refrain from issuing the request if this is determined by upper layer programs, for instance as a result of the station being stationary or moving in an local area including other access point's, which are not part of the pre-authentication area.

The gateway responds with a group response message, 35, including the list of frequencies for the purpose as explained above.

Subsequently, the station initiates pre-authentication requests to the MSYS for pre-authentication in the remaining access points in the pre-authentication area, PAA, in the order according to the choice of the station.

When the station moves within reach of the next AP - AP4 - association can be undertaken and traffic can immediately be transferred to the gateway node.

### Further embodiments

For all the embodiments above it is preferable that the outer access point's is arranged such that their antenna characteristics match the typical traffic pattern and allows fast moving stations enough time to perform the initial steps of associating and authenticating. For instance, an outer index access point could have a narrow beam antenna pointing along a linear stretch, such as corresponding to a highway thereby offering longrange contact. Antennas providing directional capabilities are widely known in the art.

The signalling method between the access points in setting up the PA-area can be any proprietary protocol or a standardised IAPP, such as the IAPP as specified by IEEE 802.11f.

According to a further embodiment of the invention, the access points are time-synchronised, such that the station can expect signalling from an expected next coming access point to appear at a certain time. In this case, HiperLAN2 may be even more suited due to faster response and more accurate timing of beacons (BCCHs).

In HIPERLAN/2 and IEEE 802.11 a the RF carrier and the symbol clock frequency are derived from the same reference oscillator. The requirement for the oscillator accuracy is ±20 ppm. This means that even if the beacon interval is fixed for the access points (AP), the timing offset between the beacon transmissions between two access points (AP) can change 40 µs, 10 OFDM symbols, in 1 second. In order to maintain a fixed offset between the beacon transmissions, some kind of access point synchronisation is required.

The synchronisation can be achieved in many ways. According to the invention, a reference clock may be transmitted to all access points, wired or wireless, from the system node or from a dedicated access point in the pre-authentication area, PAA. Another way is that the access points can listen to each other and estimate the frequency offset to the adjacent access points.

The beacon interval can then be adjusted to a common interval, i.e. the number of samples between beacons is not fixed but the time is fixed. It may also be possible to adjust the access point reference oscillator. Then the number of samples between beacons is fixed as well. If the reference oscillator for all access points are synchronised, the channel spacing will be exactly 20 MHz and there is no frequency offset between access points. Hence, the stations will experience exactly the same frequency offset versus all access points, i.e. all channels. This knowledge can be used to improve the receiver performance of the mobile stations.

According to the invention, the central node in a pre-authentication area, PAA, can also control the beacon offset between the access points. This can reduce the overhead for relaying information on the beacon offset to the mobile stations. E.g. if a mobile station is travelling along a road it knows that the next access point will have a defined beacon offset compared to the current access point. I.e. the next access point will always have a beacon offset of +x µs, or -x µs if the mobile station is travelling in the opposite direction. Hence, less information on the beacon interval and offsets for a pre-authentication area, PAA, has to be transmitted to the mobile stations.

## Claims

1. Method of preparing a mobile station for handover between access points (AP3-AP6), the method comprising the steps of
the mobile station associating (11, 21, 32) with a first access point (AP3-AP6) in a predetermined group of access points (PAA-BSS) defining a pre-authentication area (PAA) preferably having a partly overlapping contiguous coverage,
the mobile station issuing a group request message (13, 34) indicating the mobile station is interested in performing pre-authentication OR the mobile station being authenticated before a gateway node (MSYS) via signalling (23, 33) involving the associated first access point,
the mobile station receiving a response signal (14, 24, 35), wherein the response signal (14, 24, 35), comprises information as to a preferred relative index position of the access points (PAA-BSS) of the pre-authentication area (PAA) for resolving neighbouring access points to the first access point (AP3-AP6) with which the mobile station is currently associated from the response signal,
whereby the mobile station is restricting search for handover candidates to said neighbouring access points (AP3-AP6),
the mobile station performing association (19, 28, 38) with a next access point (AP3-AP6) without further authentication.

2. Method according to claim 1, wherein the mobile station is authenticating (12, 22) itself before the first access point (AP3-AP6) of the group (PAA-BSS).

3. Method according to claim 2, wherein the mobile station is transmitting a group request (13) to a given access point (AP5) of the pre-authentication area subsequent to the mobile station being authenticated (12) before the given access point (AP5).

4. Method according to claim 1 wherein the mobile station after being authenticated is transmitting a group request (34) message to the gateway node (MSYS).

5. Method according to any of claims 1 - 4, wherein a pre-authentication indication (18, 27, 37) is transmitted to the mobile station.

6. Method according to claim 1 - 4, wherein the group response signal (14, 24, 35) comprises a list of frequencies pertaining to access points (AP3 - AP6) of the group.

7. Method according to any preceding claim wherein the access points operate in compliance with the IEEE 802.11 standard.

8. System (PAA-BSS) comprising a plurality of access points (AP) and at least one mobile station (STA);
the mobile station being adapted for associating (11, 21, 32) with a first access point (AP3-AP6) in a predetermined group of access points (PAA-BSS) defining a pre-authentication area (PAA) preferably having a partly overlapping contiguous coverage,
the mobile station being adapted for issuing a group request message (13, 34) indicating the mobile station is interested in performing pre-authentication OR the mobile-station being authenticated before a gateway node (MSYS) via signalling (23, 33) involving the associated first access point,
the mobile station being adapted for receiving a response signal (14, 24, 35),
wherein the response signal (14, 24, 35), comprises information as to a preferred relative index position of the access points (PAA-BSS) of the pre-authentication area (PAA) for resolving neighbouring access points to the first access point (AP3-AP6) with which the mobile station is currently associated from the response signal,
whereby the mobile station is adapted for restricting search for handover candidates to said neighbouring access points (AP3-AP6),
the mobile station being adapted for performing association (19, 28, 38) with a next access point (AP3-AP6) without further authentication.

9. System according to claim 8, wherein the access points (AP) of the system (PAA-BSS) are being arranged along a line or curve offering coverage substantially along a main route of transportation.

10. System according to claims 8 - 9, wherein the access points are synchronised so as to issue beacon signals at a predefined beacon interval according to a commonly defined period.

11. System according to claims 8 - 10, wherein, the access points in the PAA are arranged in a contiguous fashion, preferable along a line or curve, such that outer access points are defined, the outer access points having index access points arranged between them along the line or curve.

12. System according to claims 8 - 11, wherein a given access points at least have one directional antenna directed towards an adjacent access point.

13. System according to claims 8 - 12, wherein the system comprises a system node (MSYS) performing authentication of mobile stations entering the pre-authentication area.

14. Mobile station (STA)being adapted for being handed over between access points
(AP3-AP6),
the mobile station being adapted for associating (11, 21, 32) with a first access point (AP3-AP6) in a predetermined group of access points (PAA-BSS) defining a pre-authentication area (PAA) preferably having a partly overlapping contiguous coverage,
the mobile station being adapted for issuing a group request message (13, 34) indicating the mobile station is interested in performing pre-authentication OR the mobile station being authenticated before a gateway node (MSYS) via signalling (23, 33) involving the associated first access point,
the mobile station being adapted for receiving a response signal (14, 24, 35),
wherein the response signal (14, 24, 35), comprises information as to a preferred relative index position of the access points (PAA-BSS) of the pre-authentication area (PAA) for resolving neighbouring access points to the first access point (AP3-AP6) with which the mobile station is currently associated from the response signal,
whereby the mobile station is adapted for restricting search for handover candidates to said neighbouring access points (AP3-AP6),
the mobile station being adapted for performing association (19, 28, 38) with a next access point (AP3-AP6) without further authentication.

## Patentansprüche

1. Verfahren zum Vorbereiten einer Mobilstation für Übergabe zwischen Zugangspunkten (AP3-AP6), das Verfahren die folgenden Schritte umfassend
Assoziieren (11, 21, 32), durch die Mobilstation, mit einem ersten Zugangspunkt (AP3-AP6) in einer im Voraus bestimmten Gruppe von Zugangspunkten (PAA-BSS), die einen Vor-Authentifizierungsbereich (PAA) definieren, der vorzugsweise eine teilweise überlappende, zusammenhängende Abdeckung aufweist,
Ausgeben, durch die Mobilstation, einer Gruppenanforderungsnachricht (13, 34), die angibt, dass die Mobilstation daran interessiert ist, Vor-Authentifizierung durchzuführen, ODER dass die Mobilstation vor einem Gateway-Knoten (MSYS) über Signalisierung (23, 33), die den assoziierten ersten Zugangspunkt einbezieht, authentifiziert wird,
Empfangen, durch die Mobilstation, eines Antwortsignals (14, 24, 35), wobei das Antwortsignal (14, 24, 35) Informationen bezüglich einer bevorzugten relativen Indexposition der Zugangspunkte (PAA-BSS) des Vor-Authentifizierungsbereichs (PAA) zum Auflösen angrenzender Zugangspunkte zu dem ersten Zugangspunkt (AP3-AP6), mit dem die Mobilstation gegenwärtig assoziiert ist, aus dem Antwortsignal umfasst,
wobei die Mobilstation die Suche nach Übergabekandidaten auf die angrenzenden Zugangspunkte (AP3-AP6) beschränkt,
Durchführen, durch die Mobilstation, von Assoziierung (19, 28, 38) mit einem nächsten Zugangspunkt (AP3-AP6) ohne weitere Authentifizierung.

2. Verfahren nach Anspruch 1, wobei die Mobilstation sich selbst vor dem ersten Zugangspunkt (AP3-AP6) der Gruppe (PAA-BSS) authentifiziert (12, 22).

3. Verfahren nach Anspruch 2, wobei die Mobilstation eine Gruppenanforderung (13) an einen gegebenen Zugangspunkt (AP5) des Vor-Authentifizierungsbereichs anschließend an die Authentifizierung (12) der Mobilstation vor dem gegebenen Zugangspunkt (AP5) überträgt.

4. Verfahren nach Anspruch 1, wobei die Mobilstation, nachdem sie authentifiziert wurde, eine Gruppenanforderungsnachricht (34) an den Gateway-Knoten (MSYS) überträgt.

5. Verfahren nach einem der Ansprüche 1-4, wobei eine Vor-Authentifizierungs-Anzeige (18, 27, 37) an die Mobilstation übertragen wird.

6. Verfahren nach Anspruch 1-4, wobei das Gruppenantwortsignal (14, 24, 35) eine Liste von Frequenzen, die zu Zugangspunkten (AP3-AP6) der Gruppe gehören, umfasst.

7. Verfahren nach einem der vorstehenden Ansprüche, wobei die Zugangspunkte in Übereinstimmung mit dem Standard IEEE 802.11 operieren.

8. System (PAA-BSS), umfassend eine Vielzahl von Zugangspunkten (AP) und mindestens eine Mobilstation (STA);
wobei die Mobilstation angepasst ist zum Assoziieren (11, 21, 32) mit einem ersten Zugangspunkt (AP3-AP6) in einer im Voraus bestimmten Gruppe von Zugangspunkten (PAA-BSS), die einen Vor-Authentifizierungsbereich (PAA) definieren, der vorzugsweise eine teilweise überlappende, zusammenhängende Abdeckung aufweist,
wobei die Mobilstation angepasst ist zum Ausgeben einer Gruppenanforderungsnachricht (13, 34), die angibt, dass die Mobilstation daran interessiert ist, Vor-Authentifizierung durchzuführen, ODER dass die Mobilstation vor einem Gateway-Knoten (MSYS) über Signalisierung (23, 33), die den assoziierten ersten Zugangspunkt einbezieht, authentifiziert wird,
wobei die Mobilstation angepasst ist zum Empfangen eines Antwortsignals (14, 24, 35),
wobei das Antwortsignal (14, 24, 35) Informationen bezüglich einer bevorzugten relativen Indexposition der Zugangspunkte (PAA-BSS) des Vor-Authentifizierungsbereichs (PAA) zum Auflösen angrenzender Zugangspunkte zu dem ersten Zugangspunkt (AP3-AP6), mit dem die Mobilstation gegenwärtig assoziiert ist, aus dem Antwortsignal umfasst,
wodurch die Mobilstation angepasst ist zum Beschränken der Suche nach Übergabekandidaten auf die angrenzenden Zugangspunkte (AP3-AP6),
wobei die Mobilstation angepasst ist zum Durchführen von Assoziierung (19, 28, 38) mit einem nächsten Zugangspunkt (AP3-AP6) ohne weitere Authentifizierung.

9. System nach Anspruch 8, wobei die Zugangspunkte (AP) des Systems (PAA-BSS) entlang einer Linie oder Krümmung angeordnet sind und Abdeckung im Wesentlichen entlang einer Haupttransportroute bieten.

10. System nach den Ansprüchen 8-9, wobei die Zugangspunkte synchronisiert sind, um Bakensignale in einem im Voraus definierten Bakenintervall gemäß einer gemeinsam definierten Periode auszugeben.

11. System nach den Ansprüchen 8-10, wobei die Zugangspunkte in dem PAA in einer zusammenhängenden Weise angeordnet sind, vorzugsweise entlang einer Linie oder Krümmung derart, dass äußere Zugangspunkte definiert sind, wobei die äußeren Zugangspunkte Index-Zugangspunkte aufweisen, die zwischen ihnen entlang der Linie oder Krümmung angeordnet sind.

12. System nach den Ansprüchen 8-11, wobei ein gegebener Zugangspunkt mindestens eine Richtantenne aufweist, die auf einen angrenzenden Zugangspunkt gerichtet ist.

13. System nach den Ansprüchen 8-12, wobei das System einen Systemknoten (MSYS) umfasst, der Authentifizierung von Mobilstationen, die in den Vor-Authentifizierungsbereich eintreten, durchführt.

14. Mobilstation (STA), die angepasst ist, um zwischen Zugangspunkten (AP3-AP6) übergeben zu werden,
wobei die Mobilstation angepasst ist zum Assoziieren (11, 21, 32) mit einem ersten Zugangspunkt (AP3-AP6) in einer im Voraus bestimmten Gruppe von Zugangspunkten (PAA-BSS), die einen Vor-Authentifizierungsbereich (PAA) definieren, der vorzugsweise eine teilweise überlappende, zusammenhängende Abdeckung aufweist,
wobei die Mobilstation angepasst ist zum Ausgeben einer Gruppenanforderungsnachricht (13, 34), die angibt, dass die Mobilstation daran interessiert ist, Vor-Authentifizierung durchzuführen, ODER dass die Mobilstation vor einem Gateway-Knoten (MSYS) über Signalisierung (23, 33), die den assoziierten ersten Zugangspunkt einbezieht, authentifiziert wird,
wobei die Mobilstation angepasst ist zum Empfangen eines Antwortsignals (14, 24, 35),
wobei das Antwortsignal (14, 24, 35) Informationen bezüglich einer bevorzugten relativen Indexposition der Zugangspunkte (PAA-BSS) des Vor-Authentifizierungsbereichs (PAA) zum Auflösen angrenzender Zugangspunkte zu dem ersten Zugangspunkt (AP3-AP6), mit dem die Mobilstation gegenwärtig assoziiert ist, aus dem Antwortsignal umfasst,
wodurch die Mobilstation angepasst ist zum Beschränken der Suche nach Übergabekandidaten auf die angrenzenden Zugangspunkte (AP3-AP6),
wobei die Mobilstation angepasst ist zum Durchführen von Assoziierung (19, 28, 38) mit einem nächsten Zugangspunkt (AP3-AP6) ohne weitere Authentifizierung.

## Revendications

1. Procédé destiné à préparer une station mobile en vue d'un transfert intercellulaire entre des points d'accès (AP3-AP6), le procédé comportant les étapes ci-dessous dans lesquelles :
la station mobile s'associe (11, 21, 32) à un premier point d'accès (AP3-AP6) dans un groupe prédéterminé de points d'accès (PAA-BSS) définissant une zone d'authentification préalable (PAA) présentant de préférence une couverture contiguë en chevauchement partiel ;
la station mobile émet un message de demande de groupe (13, 34) indiquant que la station mobile est intéressée par la mise en oeuvre d'une authentification préalable OU que la station mobile a été authentifiée avant un noeud de passerelle (MSYS) via une signalisation (23, 33) impliquant le premier point d'accès associé ;
la station mobile reçoit un signal de réponse (14, 24, 35), dans lequel le signal de réponse (14, 24, 35) comprend des informations connexes à une position d'index relative préférée des points d'accès (PAA-BSS) de la zone d'authentification préalable (PAA) en vue de résoudre des points d'accès voisins du premier point d'accès (AP3-AP6) auquel la station mobile est à cet instant associée à partir du signal de réponse ;
moyennant quoi la station mobile restreint la recherche des candidats à un transfert intercellulaire auxdits points d'accès voisins (AP3-AP6) ;
la station mobile met en oeuvre une association (19, 28, 38) à un point d'accès successif (AP3-AP6) sans authentification ultérieure.

2. Procédé selon la revendication 1, dans lequel la station mobile (12, 22) s'authentifie elle-même avant le premier point d'accès (AP3-AP6) du groupe (PAA-BSS).

3. Procédé selon la revendication 2, dans lequel la station mobile transmet une demande de groupe (13) à un point d'accès donné (AP5) de la zone d'authentification préalable, subséquemment au fait que la station mobile a été authentifiée (12) avant le point d'accès donné (AP5).

4. Procédé selon la revendication 1, dans lequel la station mobile, après avoir été authentifiée, transmet un message de demande de groupe (34) au noeud de passerelle (MSYS).

5. Procédé selon l'une quelconque des revendications 1 à 4, dans lequel une indication d'authentification préalable (18, 27, 37) est transmise à la station mobile.

6. Procédé selon l'une quelconque des revendications 1 à 4, dans lequel le signal de réponse de groupe (14, 24, 35) comprend une liste de fréquences relatives à des points d'accès (AP3-AP6) du groupe.

7. Procédé selon l'une quelconque des revendications précédentes, dans lequel les points d'accès opèrent en conformité à la norme IEEE 802.11.

8. Système (PAA-BSS) comprenant une pluralité de points d'accès (AP) et au moins une station mobile (STA), dans lequel ;
la station mobile est adaptée pour s'associer (11, 21, 32) à un premier point d'accès (AP3-AP6) dans un groupe prédéterminé de points d'accès (PAA-BSS) définissant une zone d'authentification préalable (PAA) présentant de préférence une couverture contiguë en chevauchement partiel ;
la station mobile est adaptée pour émettre un message de demande de groupe (13, 34) indiquant que la station mobile est intéressée par la mise en oeuvre d'une authentification préalable OU que la station mobile a été authentifiée avant un noeud de passerelle (MSYS) via une signalisation (23, 33) impliquant le premier point d'accès associé ;
la station mobile est adaptée pour recevoir un signal de réponse (14, 24, 35), dans lequel le signal de réponse (14, 24, 35) comprend des informations connexes à une position d'index relative préférée des points d'accès (PAA-BSS) de la zone d'authentification préalable (PAA) en vue de résoudre des points d'accès voisins du premier point d'accès (AP3-AP6) auquel la station mobile est à cet instant associée à partir du signal de réponse ;
moyennant quoi la station mobile est adaptée pour restreindre la recherche des candidats à un transfert intercellulaire auxdits points d'accès voisins (AP3-AP6) ;
la station mobile est adaptée pour mettre en oeuvre une association (19, 28, 38) à un point d'accès successif (AP3-AP6) sans authentification ultérieure.

9. Système selon la revendication 8, dans lequel les points d'accès (AP) du système (PAA-BSS) sont agencés le long d'une ligne ou d'une courbe offrant une couverture sensiblement le long d'une route principale d'acheminement.

10. Système selon l'une quelconque des revendications 8 à 9, dans lequel les points d'accès sont synchronisés de façon à émettre des signaux de balise à un intervalle de balise prédéfini selon une période communément définie.

11. Système selon l'une quelconque des revendications 8 à 10, dans lequel, les points d'accès dans la zone PAA sont agencés de façon contiguë, de préférence le long d'une ligne ou d'une courbe, de sorte que des points d'accès externes sont définis, les points d'accès externes présentant des points d'accès d'index agencés entre eux le long de la ligne ou de la courbe.

12. Système selon l'une quelconque des revendications 8 à 11, dans lequel les points d'accès donnés présentent au moins une antenne directionnelle orientée vers un point d'accès adjacent.

13. Système selon l'une quelconque des revendications 8 à 12, dans lequel le système comporte un noeud de système (MSYS) mettant en oeuvre l'authentification de stations mobiles entrant dans la zone d'authentification préalable.

14. Station mobile (STA) adaptée pour être transférée par le biais d'un transfert intercellulaire entre des points d'accès (AP3-AP6), dans laquelle :
la station mobile est adaptée pour s'associer (11, 21, 32) à un premier point d'accès (AP3-AP6) dans un groupe prédéterminé de points d'accès (PAA-BSS) définissant une zone d'authentification préalable (PAA) présentant de préférence une couverture contiguë en chevauchement partiel ;
la station mobile est adaptée pour émettre un message de demande de groupe (13, 34) indiquant que la station mobile est intéressée par la mise en oeuvre d'une authentification préalable OU que la station mobile a été authentifiée avant un noeud de passerelle (MSYS) via une signalisation (23, 33) impliquant le premier point d'accès associé ;
la station mobile est adaptée pour recevoir un signal de réponse (14, 24, 35), dans lequel le signal de réponse (14, 24, 35) comprend des informations connexes à une position d'index relative préférée des points d'accès (PAA-BSS) de la zone d'authentification préalable (PAA) en vue de résoudre des points d'accès voisins du premier point d'accès (AP3-AP6) auquel la station mobile est à cet instant associée à partir du signal de réponse ;
moyennant quoi la station mobile est adaptée pour restreindre la recherche des candidats à un transfert intercellulaire auxdits points d'accès voisins (AP3-AP6) ;
la station mobile est adaptée pour mettre en oeuvre une association (19, 28, 38) à un point d'accès successif (AP3-AP6) sans authentification ultérieure.
